# EUROPEAN PATENT APPLICATION

(11) **EP 3 006 319 A1**
(43) Date of publication of application: **13.04.2016**
(21) Application number: 14193561.9
(22) Date of filing: 17.11.2014
(51) Int. Cl.: B62K 3/00, B62K 15/00

(54) **A limit device for a folding scooter**

(30) Priority: 11.10.2014 CN 201420588672 U
(71) Applicant: ZheJiang JinBang Sports Equipment Co., Ltd., Zhejiang 321404 (CN)
(72) Inventor: Xu, YongQiang, Zhejiang (CN)
(74) Representative: Lang, Christian

(57) **Abstract**

The present application discloses a folding scooter, comprising a frame component (1); an inclined tube component (2), set on the frame component; a front fork component (3), set on the inclined tube component; a handlebar (4), set on the front fork component; and two brackets (5), set on the frame component, wherein a limit groove (6) is set on the brackets, a locating pin (7) is set on the limit groove, the locating pin is connected to a button (8), the button is removably connected to the inclined tube component through a spring , the inclined tube component is removably connected to the brackets through a fast unloaded component (9).

## Description

### CROSS-REFERENCE TO RELATED APPLICATIONS

The present application claims priority based on Chinese Application No. 201420588672.4 filed Oct.11, 2014, the disclosure of which is hereby incorporated by reference in its entirety.

### TECHNICAL FIELD

The present application relates to a limit device of a folding scooter.

### BACKGROUND

In the existing market, a scooter has a simple structure which a frame is fixed to a handlebar through an inclined tube component. This kind of scooter cannot be folded and it is not convenient to store for its large frame and it has no flexibility to move.

### SUMMARY

The present application is directed to a limit device for a folding scooter, which makes that the scooter can be folded and is easy to store.

An embodiment of the present application provides a folding limit device, which includes a frame component, a inclined tube component set on the frame component, a front fork component set on the inclined tube component, a handlebar set on the front fork component, two purfles set on the frame component, a limit groove is set on the purfles, a locating pin is set on the limit groove, the locating pin is connected to the button, the button is removably connected to the inclined tube component through the spring, the inclined tube component is removably connected to the purfles through the fast unloaded component.

Preferably, the fast unloaded component includes a lock screw, a self-tapping screw and a fixed pin, the lock screw, the self-tapping screw and the fixed pin are connected each other through pin holes set correspondingly on the purfles.

Preferably, a plastic gasket is set between the purfles and the inclined tube component and is a long groove matched with the limit groove of the purfles is set on the plastic gasket.

Preferably, a front wheel is set on the front fork component, a back wheel is set on the frame component.

Preferably, a protective cover is positioned on the outer of the purfles and the protective cover is set on the frame component.

It is to be understood that both the foregoing general description and the following detailed description are exemplary only and are not necessarily restrictive of the disclosure as claimed. The accompanying drawings, which are incorporated in and constitute a part of the specification, illustrate an embodiment of the disclosure and together with the general description, serve to explain the principle of the disclosure.

### BRIEF DESCRIPTION OF THE DRAWINGS

The numerous advantages of the present application may be better understood by those skilled in the art by reference to the accompanying figures in which:
Fig.1 is a structure schematic of a limit device for a folding scooter according to the present application; and
Fig.2 is a split structure schematic of a limit device for a folding scooter according to the present application; and

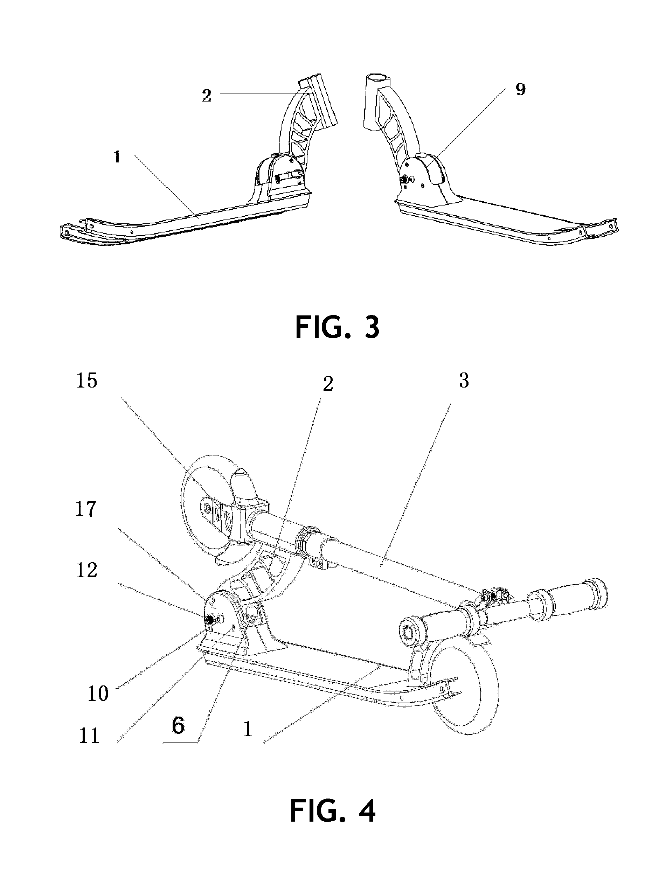

Fig.3 is a removing and assembly schematic of a limit device for a folding scooter according to the present application; and
Fig.4 is a folded state schematic diagram of a limit device for a folding scooter according to the present application with a roof; and

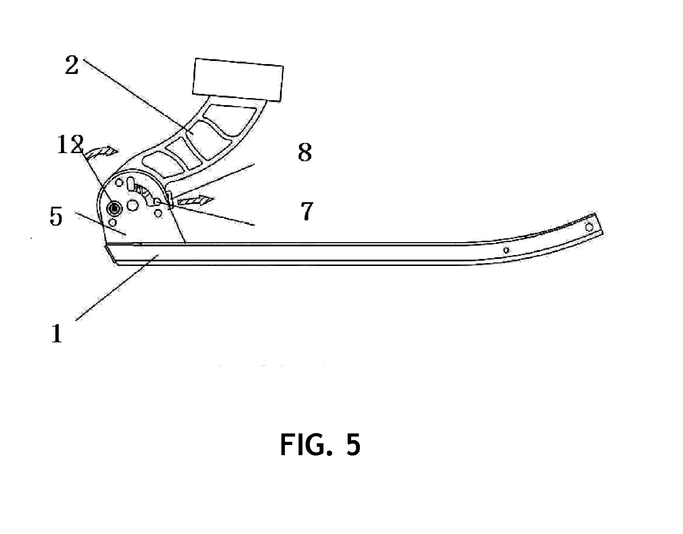

Fig.5 is a lateral view of the frame component and the inclined tube component according to the present application with a toolbox; and

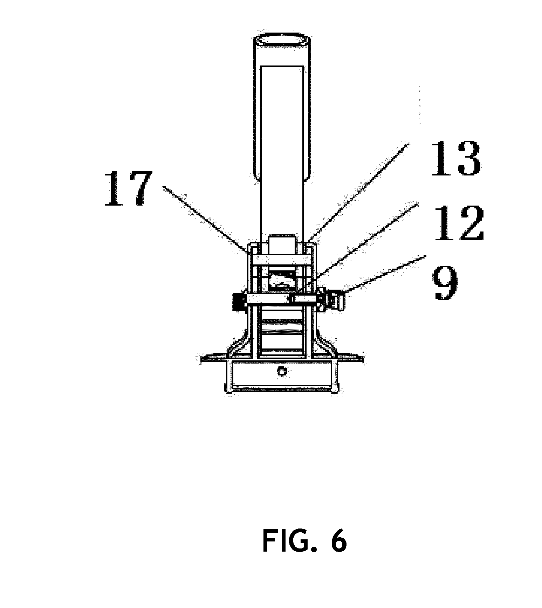

Fig.6 is an elevation view of the frame component and the inclined tube component according to the present application; and

### DETAILED DESCRIPTION

Reference will now be made in detail to the subject matter disclosed, which is illustrated in the accompanying drawings.

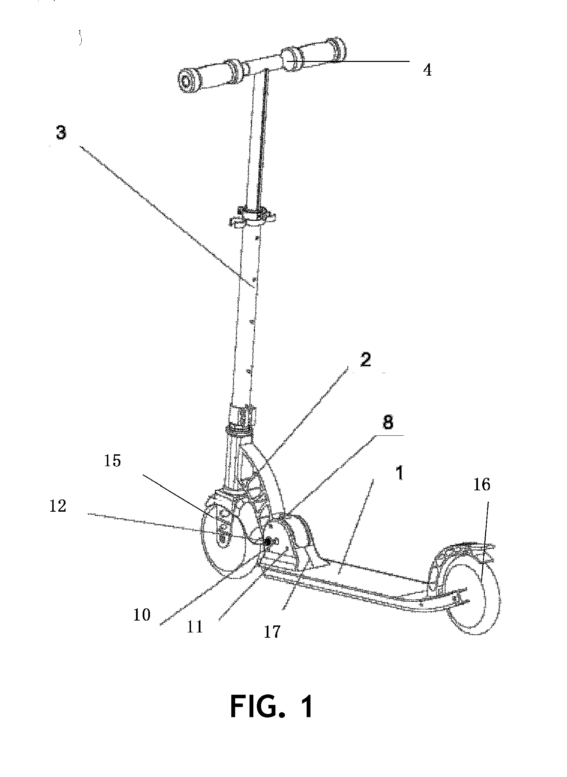

Referring to Fig. 1 to Fig. 2, present application provides a limit device for a folding scooter, which includes a frame component 1, a inclined tube component 2 set on the frame component 1, a front fork component 3 set on the inclined tube component 2, a handlebar 4 set on the front fork component 3, two purfles 5 set on the frame component 1, a limit groove 6 is set on the purfles 5, a locating pin 7 is set on the limit groove 6 and the locating pin 7 is connected to the button 8, the button 8 is removably connected to the inclined tube component 2 through the spring, the inclined tube component 2 is removably connected to the purfles 5 through the fast unloaded component 9.

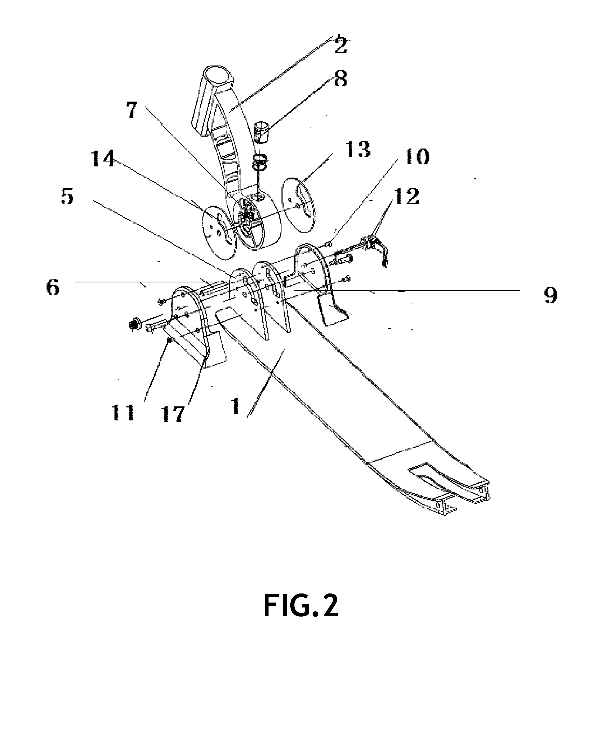

In addition, referring to Fig. 2, in one embodiment, the fast unloaded component 9 includes a lock screw 10, a self-tapping screw 11 and a fixed pin 12, the lock screw 10, self-tapping screw 11 and fixed pin12 are connected each other with the pin hole correspondingly set on the purfles 5.

Continuing to refer to Fig. 2, in one embodiment, a plastic gasket 13 is set between the purfles 5 and the inclined tube component 2, a long groove 14 matched with the limit groove 6 is set on the plastic gasket 13.

And a front wheel 15 is set on the front fork component 3, a back wheel 16 is set on the frame component 1.

Moreover, a protective cover 17 is positioned on the outer of the purfles 5 and the protective cover 17 is set on the frame component 1.

In the specific use, when need to fold, press the button 8, then the locating pin7 that been set on the limit groove 6 can move on the limit groove 6, and at the two ends of the limit groove 6, there is a projection that can stuck the locating pin 7, adjust the position of the locating pins, then the scooter can be folded.

## Claims

1. A limit device for a folding scooter, the limit device comprising:
a frame component;
an inclined tube component set on the frame component;
a front fork component set on the inclined tube component;
a handlebar set on the front fork component; and
two purfles set on the frame component,
wherein a limit groove is set on the purfles, a locating pin is set on the limit groove, the locating pin is connected to a button, the button is removably connected to the inclined tube component through a spring, the inclined tube component is removably connected to the purfles through a fast unloaded component.

2. The limit device as set forth in claim 1, wherein the fast unloaded component comprising a lock screw, a self-tapping screw and a fixed pin, the lock screw, the self-tapping screw and fixed pin are connected each other through pin holes correspondingly sets on the purfles.

3. The limit device as set forth in claim 2, wherein a plastic gasket is set between the purfles and the inclined tube component, and a long groove matched with the limit groove is set on the plastic gasket.

4. The limit device as set forth in claim 3, wherein a front wheel is set on the front fork component, a back wheel is set on the frame component.

5. The limit device as set forth in claim 4, wherein a protective cover is positioned on the outer of the purfles and the protective cover is set on the frame component.
